# EUROPEAN PATENT SPECIFICATION

(11) **EP 0 200 479 B1**
(45) Date of publication and mention of the grant of the patent: **08.03.1995**
(21) Application number: 86303101.9
(22) Date of filing: 24.04.1986
(51) Int. Cl.: C08G 8/24, C08L 61/06, C09J 161/04

(54) **Phenolic resins**
Phenolharze
Résines phénoliques

(30) Priority: 24.04.1985 US 726511
(43) Date of publication of application: 05.11.1986
(73) Proprietor: INDSPEC CHEMICAL CORPORATION, Pittsburgh Pennsylvania 15219 (US)
(72) Inventor: Hood, Richard T., Murrysville Pennsylvania 15668 (US); Bender, Raymond L., Bakerstown Pennsylvania 15007 (US)
(74) Representative: Bull, Michael Alan

(56) References cited:
- US-A- 3 328 354
- US-A- 3 389 125
- CHEMICAL ABSTRACTS, vol. 95, part 8, 24th August 1981, page 33, abstract no. 63165q, Columbus, Ohio, US; & JP-A-81 57 815

## Description

This invention relates to phenolic resins and more particularly is concerned with phenol-resorcinol-formaldehyde resins for use in forming fast-curing wood-laminating adhesives.

Phenolic resin adhesives are well known for their strength and durability and are commonly prepared by the alkaline condensation of formaldehyde with phenol or resorcinol or a mixture of the two. It has been common practice to use ammonia and/or amines as alkaline condensation catalysts. Resorcinol-formaldehyde resin adhesives, which cure at room temperature under neutral pH conditions, have been widely used in the manufacture of laminated timbers, roof trusses, boat structures and other wood products.

United States Patent No. 3929695 relates to a method of preparing a rapidly curable and highly extendable phenolic resin adhesive which consists of adding a resorcinol, a formaldehyde and an alkali metal carbonate to a water-soluble thermosetting phenolic resin.

Resorcinol is the only polyhydric phenol used to any significant extent directly in the preparation of phenolic resin adhesives and, in general, only those phenolic resins containing resorcinol are commercially important for adhesive applications requiring room temperature setting or curing. The resorcinol-containing resin adhesives also have the advantage of being waterproof and durable. Because of its cost, however, the use of resorcinol has been restricted and, as a compromise between cost and performance, resorcinol-modified phenol-formaldehyde resin adhesive have been developed. Conventionally, the preparation of a resorcinol-modified phenol-formaldehyde resin adhesive involves the steps of forming a solution of a water-soluble, fusible phenol-resorcinol-formaldehyde resin and making an adhesive mix therefrom by adding to the resin solution a methylene donor which cures the resin to a cross-linked, insoluble, infusible state. Commonly used methylene donors, or hardeners, are aqueous formaldehyde, paraformaldehyde, hexamethylenetetramine and the like. In addition to such hardeners, the adhesive mix generally also contains fillers, i.e. inert materials added to increase the weight of the mix, and extenders, i.e. inert materials which lessen the cost without reducing the valuable properties of the adhesive. Commonly used extenders include walnut shell flour, wood flour, bark flour, asbestos and cellulosic fibres. The curing time of a particular adhesive mix can often be adjusted with a catalyst or modifier, and alkali metal hydroxides have been used to speed the cure for water-proof adhesives in wood laminating. However, the degree to which cure time can be reduced by the use of alkali metal hydroxides is limited as there is a point whereat the metal hydroxides solubilize the cured adhesives and the bond is no longer waterproof.

According to the present invention there is provided a method for making a fusible phenol-resorcinol-formaldehyde resin solution, which resin solution comprises not more than 95 moles phenol and not less than 5 moles resorcinol per 100 moles of total phenol and resorcinol and from 0.55 to 0.75 moles of formaldehyde for each mole total of phenol and resorcinol, characterised in that said resin solution is prepared by the steps of:
(a) reacting said phenol and said formaldehyde at an initial pH in the range of from 8.5 to 9.2 in the presence of an alkali metal sulphite or bisulphite catalyst;
(b) then heating the reaction mixture to reflux until the mixture has a viscosity, when measured by the Gardner-Holdt method, in the range of from U to V Gardner-Holdt letters;
(c) introducing the resorcinol to the reaction mixture and continuing refluxing until the reaction mixture has a substantially constant viscosity, when measured by the Gardner-Holdt method, in the range of from 30 to 100 Gardner seconds;
(d) then diluting the reaction mixture with a water-miscible solvent and adding an alkali metal carbonate in an amount by weight in the range of from 4 to 8 percent of the weight of the reaction mixture present at the completion Of step (c) to obtain a resin solution having a solids content in the range of from 40 to 60 percent by weight; and
(e) if the pH of the resin solution formed in step (d) is less than about 7.5, adjusting the pH of said resin solution to a pH of at least about 7.5.

According to another aspect of the present invention, there is provided a fast-curing phenol-resorcinol-formaldehyde resin composition which resin comprises the condensation product of 50 to 95 moles phenol and 5 to 50 moles of resorcinol per 100 moles of total phenol and resorcinol and 0.55 to 0.75 moles of formaldehyde for each mole of combined phenol and resorcinol, characterised in that it additionally contains from 4 to 8 percent by weight of the resin of an alkali metal carbonate.

We have found inter alia that the metal carbonates, surprisingly and unexpectedly, do not solubilize the cured adhesive and therefore allow for faster curing resins than is possible with metal hydroxides.

A thixotropic resin may be obtained by adding to the resin solution, for example, 2 parts or more by weight of fumed silica per 100 parts of resin solution, using high shear mixing equipment such as a SOLONATOR™.

The general procedure for preparing the novel resin solutions of the invention is as follows. Formaldehyde (usually as a 37 percent aqueous solution) is mixed with the alkali metal sulphite or bisulphite catalyst and the mixture is heated to dissolve the catalyst. For ease of operation, this is conveniently done before the addition of the phenol, although the phenol can be added initially before dissolving the catalyst. The phenol is charged to the reaction mixture with the pH of the mixture being maintained between 8.5 and 9.2. The reaction mixture is then refluxed until a viscosity in the range of U-V Gardner letters is obtained. The extent of condensation is conveniently determined by following the viscosity during condensation. The advancement of the condensation between the phenol and formaldehyde to a stage corresponding to a viscosity of U-V Gardner letters is necessary in order to obtain the unique properties of the resin solutions and resin adhesives of the invention. This high degree of condensation, which is unique in the preparation of phenol-resorcinol-formaldehyde resins, effectively ties up the available phenol, thereby avoiding the odour problems that have plagued the art. The high degree of phenol condensation (prior to the resorcinol addition) provides an extremely reactive resin which can be formulated into an adhesive having a long pot life as well as rapid curing characteristics. As noted above, the advancement of the phenol-formaldehyde condensation is made possible by the use of the sulphite catalyst.

It is important, for the purposes of the present invention, to complete the advancement of the phenol-formaldehyde portion of the condensation to the above indicated viscosity before all of the resorcinol is added. It is convenient to condense the phenol and formaldehyde until the critical viscosity of U-V Gardner letters is reached and thereafter add the resorcinol, but excellent resins can also be made by adding the resorcinol continuously or incrementally after the phenol-formaldehyde condensation has been advanced to a viscosity of 1.25 poises (0.125 Pa.s). Using the continuous or incremental addition procedure at least the last 25 weight percent of the resorcinol should be added after a viscosity of U Gardner letter has been attained. Using the incremental technique, resorcinol is conveniently added in three or four increments. After the addition of resorcinol is complete, refluxing is continued until the reaction mixture reaches a constant viscosity which is in the range of 30-100 poises (3-10 Pa.s).

The viscosity of the resin solution thus prepared is extremely high compared to the normal glue viscosity of adhesive mixes. To make a resin solution useful in adhesive formulations, the resin, prepared as described hereabove, is diluted with water, or with any water-miscible solvent conventional in the adhesive art. Particularly useful are mixed solvents comprising two or more of water, lower aliphatic alcohols and glycols. One useful solvent solution is a mixture of ethylene glycol, ethyl alcohol and water in a ratio of 15:15:70 parts by weight. At the same time as the resin solution is diluted, the alkali metal carbonate is added. Ordinarily, the resin solutions of the invention, containing the alkali metal carbonate, are diluted with one of these solvent systems to a viscosity not less than 2.0 poise (0.2 Pa.s). Conveniently, the resin solutions are diluted to a viscosity below 3.5 poise (0.35 Pa.s), and preferably 2.5 poise (0.25 Pa.s).

The mole ratios of the phenolic compounds usually vary from 50-95 moles of phenol to 50-5 moles of resorcinol per 100 moles of total phenolic compounds. The resorcinol enhances the reactivity of the resin and it is, therefore, necessary to have a minimum of about 5 mole % resorcinol present. When the resin contains an insufficient amount of resorcinol, the temperature required for curing rises considerably, and if the resorcinol is omitted entirely, curing temperatures of 240^{o}F (115.5^{o}C). and higher are required in the absence of a strong catalyst. If more than 50 mole % of resorcinol is used, the cost of the resorcinol component is a detriment and, thus, to use more than 50 mole % resorcinol to form an adhesive having a solids content of 40-60% by weight would be economically disadvantageous.

The mole ratio of formaldehyde to the total phenolic portion of the resin is in the range 0.55-0.75 mole per mole of phenolic component. If an excess is used, the stability of the resulting resin is impaired which adversely affects both the pot life and the washability of the adhesive prepared therefrom. Conversely there must be a minimum amount of formaldehyde present sufficient to effect substantial condensation of the phenol portion of the resin.

An alkali metal sulphite is required to catalyze the initial condensation reaction. The amount of alkali metal sulphite used should be sufficient to produce a pH in the range of from 8.5 to 9.2. Preferably, the amount of sulphite used, based upon a mole ratio of sulphite to formaldehyde, should be 0.04 to 0.09 mole of sulphite catalyst per mole of formaldehyde. If less than 0.04 mole of sulphite is used, there is insufficient catalyst to advance the condensation of the resin to the required degree and adhesives prepared therefrom have poor gluing properties, particularly with respect to delamination. Conversely, if an amount of sulphite greater than 0.09 mole is used, there are undesirable side reactions between the sulphite and the formaldehyde which tend to prevent condensation of the phenol and formaldehyde. The alkali metal sulphite catalysts useful in the present invention include the sodium, potassium and lithium sulphites. Sodium sulphite, being the most economical and the most readily available, is preferred. The bisulphites of the alkali metals are equivalent to the sulphites if used in an equivalent amount on an SO₃ basis and therefore their use is within the scope of the present invention. On the other hand, it has been found that other alkalis, such as sodium hydroxide and the like, cannot be used to prepare the novel resins of the present invention.

For a better understanding of the invention, and to show more clearly how the same may be carried into effect, reference will now be made, by way of example, to the accompanying drawings in which:
Fig. 1 is a flow diagram of one embodiment of the process of the present invention; and
Fig. 2 is a flow diagram of an alternative embodiment of the process of the present invention.

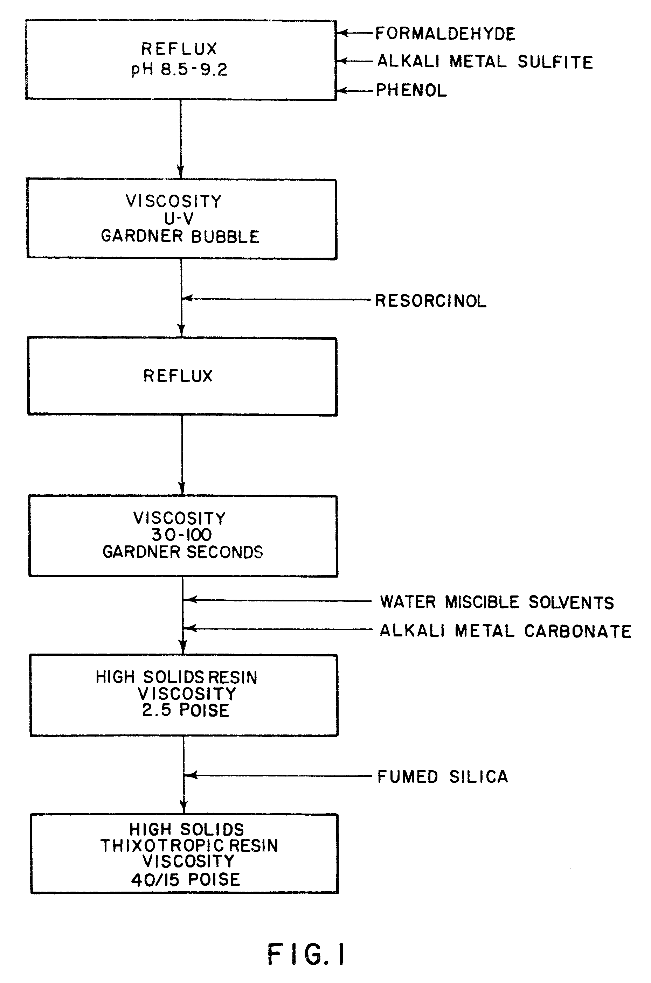

The schematic flow diagram of Figure 1 shows a process for preparing water-soluble, fusible phenol-resorcinol-formaldehyde resins having a composition comprising 50-95 moles phenol and 50-5 moles resorcinol per 100 moles of total phenolic compound. The resin is made by reacting the phenol and all of the formaldehyde in the presence of 0.04-0.09 mole of an alkali metal sulphite catalyst per mole of formaldehyde and refluxing the reaction mixture until the mixture has attained a viscosity of U-V Gardner letter. Resorcinol is then added to the reaction mixture and refluxing is continued until the resin has a constant viscosity in the range 30-100 Gardner seconds. To render the resin suitable for use in adhesive formulations, it is diluted with a water-miscible solvent to give a solution having a solids content of 48% by weight and a viscosity of about 2.5 poise (0.25 Pa.s). An alkali metal carbonate is added substantially simultaneously with the addition of the water-miscible solvent in the amount of 6 parts by weight per 100 parts of resin. Potassium carbonate is the preferred alkali metal carbonate for this purpose. Fumed silica in the amount of 2 parts by weight per 100 parts by weight of resin solution is then stirred into the resin to web it after which a high shear SONOLATOR™ is used to mix it with the resin to form a high solids thixotropic resin having a viscosity of about 40/15 poise (4/1.5 Pa.s).

The phenol-resorcinol-formaldehyde resin solution prepared as described above can be mixed with a hardener comprising paraformaldehyde or paraformaldehyde in one of its higher polymeric forms at a pH of about 9.5, along with conventional fillers and extenders as desired, to give a novel phenolic resin adhesive. The hardener could be incorporated in a slurry and one slurry which has been found not to separate consists of paraformaldehyde in the amount of 45.1% by weight, nut shell flour in the amount of 39.2% by weight, polyvinyl alcohol in the amount of 9.85 by weight and ATTOGEL^{RTM} 40 (an attapulgite clay) in the amount of 5.6% by weight. The amount of polyvinyl alcohol used in such a slurry can range from 5 to 20% by weight. The amount of ATTOGEL^{RTM} 40 used can range from 3 to 11%, but at least 3% is needed to keep the slurry from separating whilst if more than 11% is added to the slurry it becomes too thick to flow.

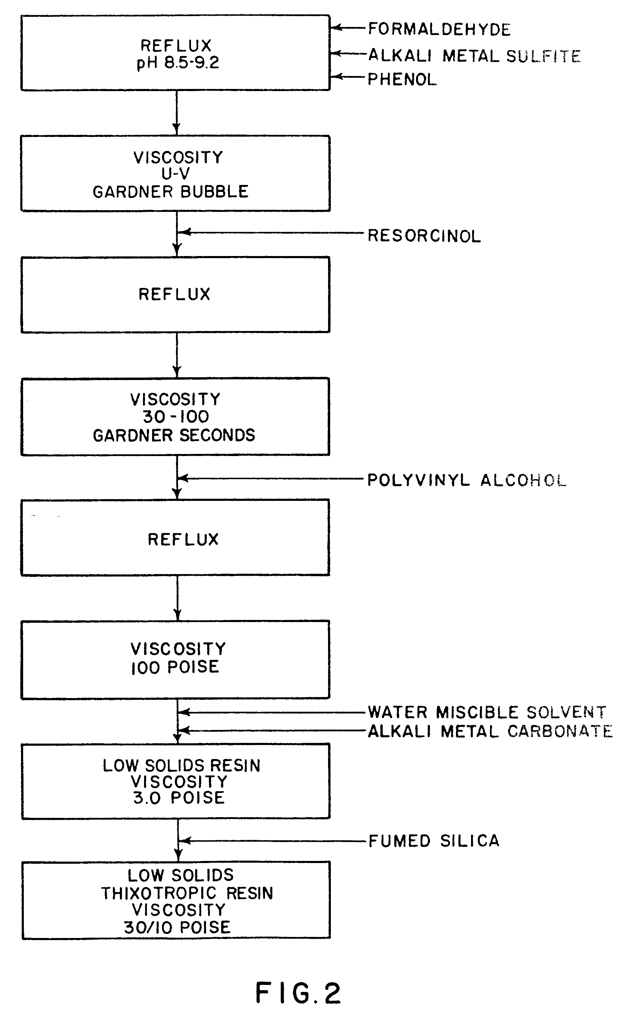

The schematic flow diagram of Figure 2 shows an alternative embodiment of the invention in which formaldehyde and phenol are reacted in the presence of an alkali metal sulphite catalyst in the manner described above. Also in the manner described above, the reaction mixture is heated to reflux until the mixture has a viscosity of from U-V Gardner letter on the Gardner-Holdt bubble test after which the resorcinol is added and the refluxing continued until the viscosity is substantially constant and in the range 300-100 Gardner seconds. At this point this embodiment differs from the one described above in that polyvinyl alcohol is added and fluxing is continued until the viscosity is in the range of from 95 to 105 poise (9.5-10.5 Pa.s) and preferably is about 100 poise (10 Pa.s)

In the manner described in the first embodiment, a water miscible solvent and an alkali metal carbonate are then added to produce a low solids resin having a viscosity of about 3.0 poise (0.3 Pa.s). Fumed silica is then added in the manner described in the first embodiment to produce a low solids thixotropic resin having a viscosity of about 30/10 poise 3/1 Pa.s).

An adhesive of the invention can be prepared by mixing the resin solution, adjusted to the desired viscosity as described hereinabove, with paraformaldehyde hardener at a pH of 7.5-9.5 along with suitable fillers and extenders if desired.

In order to provide the long pot life characteristic of the adhesive of the invention, it is preferable to use as hardener or setting agent paraformaldehyde, either as such or as one of its higher polymers commonly referred to as alpha-polyoxymenthylene and beta-polyoxymethylene. The higher polymers of paraformaldehyde are easily prepared by heating a paraformaldehyde to a temperature of approximately 100^{o}C., preferably in the presence of an acid catalyst, such as oxalic acid or a Lewis acid. The paraformaldehyde or polyoxymethylene is added to the adhesive mix in an amount sufficient to convert the resin into a water-insoluble, infusible state. The minimum amount required is that which is sufficient to provide a total formaldehyde (including that initially condensed with the resin) to total phenolic compound mole ratio greater than 1:1, preferably in the range of 1.3 to 2 moles of total formaldehyde to one mole of total phenolic compound.

The paraformaldehyde is conveniently added as a hardener portion of the adhesive mix along with the conventional extenders and fillers, such as walnut shell flour, wood flour, and the like. Prior to the addition of the hardener portion, the pH of the adhesive mix is adjusted to 7.5 to 9.5, preferably by the addition of 50 percent aqueous caustic. If the pH of the adhesive mix is less than 7.5, the rapid curing characteristics are not attained. If the pH is greater than 9.5, the pot life of the adhesive is drastically reduced.

The bonding characteristics of phenol-resorcinol-formaldehyde resins and adhesives are conventionally evaluated by a compression shear test (ASTM-D-905) and a vacuum pressure delamination test (ASTM-D-2559). The numerical results of these tests depend upon the type of wood to be bonded. On Douglas fir compression shear tests of bonds made using the adhesive of the invention shows 80-95 percent wood failure. The wood failure on Southern pine is 80-95 percent. In both cases these results are considered to be excellent. The bond provided by the adhesives of the invention shows, according to the vacuum pressure delamination test, less than one percent delamination for Douglas fir and less than three percent delamination for Southern pine. Such resins and adhesives were also found to cure significantly faster than conventional phenol-resorcinol-formaldehyde resins and adhesives.

The invention is further illustrated by the following Examples:

### Example 1

A phenol-resorcinol-formaldehyde resin was prepared according to the following charge schedule:

| Charge | Moles | Pounds/Kg |
|---|---|---|
| Formaldehyde (37.0%) | 35.98 | 2920/1327.3 |
| Sodium Sulphite | 2.54 | 320/145.5 |
| Phenol USP (90%) | 41.98 | 4390/1995.5 |
| Resorcinol, Tech. | 17.98 | 1980/900.0 |
| AEROSIL^{RTM} 200, Fumed Silica | - | 153/69.6 |

The ingredients were added in the following ratio:

| Ingredients: | Mole Ratio |
|---|---|
| Phenol:resorcinol:formaldehyde | 70:30:60 |
| Formaldehyde:sodium sulphite | 1:0:-71 |

The formaldehyde was charged to a 1000 U.S. gallon reactor fitted with a pump for agitation and the sodium sulphite was then gradually added. Agitation was commenced and the mixture was maintained at a temperature of about 30^{o} C. for 30 minutes. The phenol was charged to the reactor and the pH was determined and found to be 8.9. The mixture was heated to reflux and at various stages, at intervals of approximately 15 minutes, the viscosity changes were noted. Refluxing was continued until the viscosity was in a range of U-V when measured on a Gardner-Holdt bubble-tube viscosimeter. The resorcinol was added and reflux was continued until there was obtained a viscosity which was constant over a period of 60 minutes, this viscosity being 45 Gardner seconds as measured by Gardner bubble-tube. The reaction mixture was cooled and diluted with 580 pounds (263 kg) of ethyl alcohol, 190 pounds (86.2 kg) of ethylene glycol, 2880 pounds (1306.4 kg) of water and 600 pounds (272.2 kg) of a 47% potassium carbonate solution to a viscosity of 2.5 poise (0.25 Pa.s) at 23^{o} C. and a pH of 8.9. After the resin had been adjusted for viscosity and pH, 153 pounds (69.4 kg) AEROSIL^{RTM} 200 (fumed silica) was added and the mixture was agitated for thirty minutes. The mixture was then recirculated through a SONOLATOR™ until the AEROSIL^{RTM} 200 was uniformly dispersed. The resin viscosity was 120 poise (12 Pa.s) at 10 rpm as measured in a Brookfield Viscometer.

A resin prepared by the above procedure should have a gel time of about 200 minutes when 100 parts are treated with a setting agent comprising 8 parts heat-treated paraformaldehyde (polyoxymethylene) and 12 parts walnut shell flour.

### Example 2

Following the procedure of Example 1, with the exception that polyvinyl alcohol was added to thicken the resin and additional water was added to adjust viscosity, a lower cost resin was prepared according to the following formulation.

| Charge | Moles | Pounds/Kg |
|---|---|---|
| Formaldehyde (37%) | 35.98 | 2920/1327.3 |
| Sodium Sulphite | 2.54 | 320/145.5 |
| Phenol USP (90%) | 41.98 | 4390/1995.5 |
| Resorcinol, Tech. | 17.98 | 1980/900.0 |
| Polyvinyl Alcohol | - | 125/56.8 |
| Fumed Silica, AEROSIL^{RTM} 200 | - | 200/90.9 |

The procedure of Example 1 was modified such that after the resorcinol was added and a constant viscosity had been obtained the polyvinyl alcohol was added and reflux continued to a constant viscosity which was 110 poise (11 Pa.s).

The reaction mass was cooled and diluted with 580 pounds (263 kg) of ethyl alcohol, 190 pounds (86.2 kg) of ethylene glycol, 2430 pounds (1102.2 kg) of water and 600 pounds (272.2 kg) of 47% potassium carbonate solution to a visosity of 4.4 poise (0.44 Pa.s) at 23^{o} C. and a pH of 8.0 AEROSIL^{RTM} 200 was added and the mixture was recirculated through a SONOLATOR™ until the AEROSIL^{RTM} had uniformly dispersed. The resin viscosity was 130 poise (13 Pa.s) at 10 rpm as measured on a Brookfield Viscosimeter.

The resin should have a gel time of 190 minutes when 100 parts by weight was treated with 209 parts of a setting agent comprising 8 parts heat-treated paraformaldehyde (polyoxymethylene) and 12 parts walnut shell flour.

### Example 3

A compression shear test (ASTM-D-905) was performed on three laminated Douglas Fir samples. In the first of these samples, (Sample I), there was used an adhesive as described above which was formed from a phenol-resorcinol-formaldehyde resin which contained 4 parts by weight potassium carbonate per 100 parts resin. The second of these samples, (Sample II), was an adhesive as described above which contained 6 parts by weight potassium carbonate per 100 parts resin. The third of these sample, (Sample III), was a conventional adhesive which contained 5 parts conventional sodium hydroxide per 100 parts resin. These samples were subject to pressure and that pressure was measured at certain time intervals. Percent wood failure, percent delamination and minimum mix gel time were also measured. The temperature was 50^{o} F (10^{o}C). (Lower temperatures are not recommended for use). The results of this test are summarized on the following Table I.

**TABLE I**

| | Sample I | Sample II | Sample III |
|---|---|---|---|
| Mix Gel Time,Min. | 369 | 314 | 311 |

| Time | p.s.i. (M Pa) delamination | - percent wood failure/percent | |
|---|---|---|---|
| 6 Hours | 560(3.86)-5/0 | 718(4.95)-0/0 | 568(3.92)-20/0 |
| 7 Hours | 1049(7.23)-43/0 | 1013(6.98)-61/0 | 690(4.76)-8/0 |
| 8 Hours | 1021(7.04)-61/0 | 1089(7.51)-67/0 | 997 6.87)-47/0 |
| 9 Hours | 1129(7.78)-82/0 | - | 790(5.45)-31/0 |
| 26 Hours | 1011(6.97)-89/0.8 | 1127(7.77)-85/0.7 | 1105(7.62)-88/27.2 |

### Example 4

A phenol-resorcinol-formaldehyde resin was prepared according to the following charge schedule:

| Charge | Moles | Pounds/kg |
|---|---|---|
| Formaldehyde (37.0%) | 35.98 | 2970/1350.0 |
| Sodium Sulphite | 2.54 | 320/145.5 |
| Phenol USP (90%) | 41.98 | 4448/2021.8 |
| Resorcinol, Tech. | 17.98 | 1980/900.0 |
| AEROSIL^{RTM} 200, Fumed Silica | - | 200/90.9 |

The ingredients were added in the following ratio:

| Ingredients: | Mole Ratio |
|---|---|
| Phenol:resorcinol:formaldehyde | 70:30:60 |
| Formaldehyde:sodium sulphite | 1:0.071 |

The formaldehyde was charged to a 1000 U.S. gallon reactor fitted with a pump for agitation and the sodium sulphite was gradually added. Agitation was commenced and the mixture maintained at a temperature of about 30^{o} C. for 30 minutes. The phenol was charged to the rector and the pH was determined and found to be 8.9. The mixture was heated to reflux and at various stages, at intervals of approximately 15 minutes, the viscosity changes were noted and refluxing continued until the viscosity was in a range of U-V Gardner letters on a Gardner bubble-tube viscosimeter. Resorcinol was added and reflux was continued until there was obtained a viscosity which was constant over a period of 60 minutes, this viscosity being 45 Gardner seconds measured by Gardner bubble-tube. The reaction mixture was cooled and diluted with 580 pounds (263 kg) of ethyl alcohol, 190 pounds (86.2 kg) of ethylene glycol, and 1606 pounds (728.5 kg) of water and 445 pounds (201.9 kg) of 47 percent potassium carbonate solution to a viscosity of 4.34 poise (0.434 Pa.s) at 23^{o} C. and a pH of 8.0. After the resin was adjusted for viscosity and pH, 200 pounds (90.7 kg) of AEROSIL^{RTM} 200 (fumed silica) was added and the mixture was agitated for thirty minutes. The mixture was then recirculated through a SONOLATOR™ until the AEROSIL^{RTM} 200 was uniformly dispersed. The resin viscosity was 90 poise (9 Pa.s) at 10 rpm as measured in a Brookfield viscosimeter.

A resin prepared by the above procedure should have a gel time of about 200 minutes when 100 parts are treated with a setting agent slurry comprising 2 parts water and 8.6 parts paraformaldehyde, 7.4 parts Pecan shell flour, 1.9 parts polyvinyl alcohol and 1.1 parts attapulgite clay.

## Claims

1. A method for making a fusible phenol-resorcinol-formaldehyde resin solution, which resin solution comprises not more than 95 moles phenol and not less than 5 moles resorcinol per 100 moles of total phenol and resorcinol and from 0.55 to 0.75 moles of formaldehyde for each mole total of phenol and resorcinol, characterised in that said resin solution is prepared by the steps of:
(a) reacting said phenol and said formaldehyde at an initial pH in the range of from 8.5 to 9.2 in the presence of an alkali metal sulphite or bisulphite catalyst;
(b) then heating the reaction mixture to reflux until the mixture has a viscosity, when measured by Gardner-Holdt method, in the range of from U to V Gardner-Holdt letters;
(c) introducing the resorcinol to the reaction mixture and continuing refluxing until the reaction mixture has a substantially constant viscosity in the range of from 30 to 100 Gardner seconds;
(d) then diluting the reaction mixture with a water-miscible solvent and adding an alkali metal carbonate in an amount by weight in the range of from 4 to 8 percent of the weight of the reaction mixture present at the completion of step (c) to obtain a resin solution having a solids content in the range of from 40 to 60 percent by weight; and
(e) then, if the pH of resin solution formed in step (d) is less than 7.5, adjusting the pH of said resin solution to a pH of at least 7.5.

2. A method according to claim 1, characterised in that in step (a) there is used from 0.04 to 0.09 mole of sulphite per mole of formaldehyde.

3. A method according to claim 1 or 2, characterised in that in step (d) the reaction mixture is diluted to a viscosity not less than 2.0 poise (0.2Pa.S).

4. A method according to Claim 1, 2 or 3 characterised in that in step (d) the resin solution formed is a high resin-solids solution having a viscosity in the range of from 2.0 to 2.5 poise (0.2 to 0.25 Pa.S).

5. A method according to claim 1, 2, 3 or 4, characterised in that after step (d) fumed silica is added to the resin solution to form a high solids thixotropic resin solution.

6. A method according to Claim 1, 2 or 3, characterised in that between step (c) and (d) polyvinyl alcohol is added to the reaction mixture and refluxing is continued until the viscosity of the reaction mixture is in the range of from 95 to 105 poise (9.5-10.5 Pa.S).

7. A method according to Claim 6, characterised in that in step (d) the resin solution formed is a low resin-solids solution having a viscosity of about 3.0 poise (0.3Pa.S).

8. A method according to Claim 6 or 7, characterised in that after step (d) fumed silica is added to the resin solution to form a low solids thixotropic resin solution.

9. A method according to any one of claims 1 to 8, characterized in that the alkali metal carbonate added in step (c) is potassium carbonate.

10. A process for the preparation of a phenol-resorcinol-formaldehyde resin adhesive which comprises mixing a resin solution prepared according to the method of any one of claims 1 to 9 with a hardener and optionally with one or more of conventional resin adhesive fillers or extenders.

11. A process according to claim 10, wherein the hardener is paraformaldehyde or paraformaldehyde in one of its higher polymeric forms and mixing takes place at a pH in the range 7.5 to 9.5.

12. A process according to claim 10 or 11, wherein the resin solution is mixed with a hardener slurry comprising polyvinyl alcohol in an amount ranging from 5 to 20% by weight and attapulgite mineral in an amount ranging from 3 to 11% by weight, with paraformaldehyde and nut shell flour comprising the remainder of said hardener slurry.

13. A phenol-resorcinol-formaldehyde resin for use in the preparation of a fast-curing phenol-resorcinol-formaldehyde resin adhesive comprising a phenolic-resorcinol-formaldehyde resin prepared by a method according to any one of claims 1 to 9.

14. A stable phenol-resorcinol-formaldehyde resin which comprises the condensation product of 50 to 95 moles phenol and 5 to 50 moles of resorcinol per 100 moles of total phenol and resorcinol, and 0.55 to 0.75 moles of formaldehyde for each mole of the total phenol and resorcinol content, characterised in that it additionally contains from 4 to 8 percent by weight of the resin of an alkali metal carbonate.

15. A stable resin according to Claim 13 or 14, wherein the alkali metal carbonate is potassium carbonate.

16. A phenol-resorcinol-formaldehyde resin adhesive prepared by a process according to any one of claims 10 to 12.

17. A phenol-resorcinol-formaldehyde resin adhesive which comprises a resin according to any one of claims 13 to 15 and a hardener with optionally one or more of conventional resin adhesive fillers or extenders.

18. A phenol-resorcinol-formaldehyde resin adhesive which comprises a resin according to any one of claims 13 to 15 and a hardener component which comprises polyvinyl alcohol in an amount ranging from 5 to 20% by weight, attapulgite mineral in an amount ranging from 3 to 11% by weight, paraformaldehyde and nut shell flour.

## Patentansprüche

1. Verfahren zur Herstellung einer schmelzbaren Phenol-Resorcinol-Formaldehyd-Harzlösung, umfassend nicht mehr als 95 Mol Phenol und nicht weniger als 5 Mol Resorcinol pro 100 Mol des gesamten Phenols und Resorcinols und 0,55 bis 0,75 Mol Formaldehyd auf jedes Mol des gesamten Phenols und Resorcinols, dadurch gekennzeichnet, daß die Harzlösung durch die Schritte hergestellt wird:
(a) Reagieren von Phenol und Formaldehyd bei einem pH-Anfangswert im Bereich von 8,5 bis 9,2 in Gegenwart eines Alkalimetallsulfit- oder -bisulfitkatalysators;
(b) anschließendes Erwärmen der Reaktionsmischung unter Rückfluß, bis die Mischung eine nach dem Gardner-Holdt-Verfahren gemessene Viskosität im Bereich von U bis V nach Gardner-Holdt hat;
(c) Einführen von Resorcinol in die Reaktionsmischung und Fortsetzen des Rückflusses, bis die Reaktionsmischung eine im wesentlichen konstante Viskosität im Bereich von 30 bis 100 Gardner-Sekunden hat;
(d) anschließendes Verdünnen der Reaktionsmischung mit einem mit Wasser mischbaren Lösungsmittel und Zusetzen von Alkalimetallcarbonat in einer Gewichtsmenge im Bereich von 4 bis 8 Gew.% der am Ende des Schrittes (c) vorhandenen Reaktionsmischung, wodurch eine Harzlösung mit einem Feststoffgehalt im Bereich von 40 bis 60 Gew.% erhalten wird; und
(e) anschließendes Einstellen des pH-Wertes der Harzlösung auf einen pH-Wert von mindestens 7,5, wenn der pH-Wert der im Schritt (d) gebildeten Harzlösung weniger als 7,5 beträgt.

2. Verfahren nach Anspruch 1, dadurch gekennzeichnet, daß im Schritt (a) 0,04 bis 0,09 Mol Sulfit pro Mol Formaldehyd verwendet werden.

3. Verfahren nach Anspruch 1 oder 2, dadurch gekennzeichnet, daß die Reaktionsmischung im Schritt (d) bis zu einer Viskosität von nicht weniger als 2,0 Poise (0,2 Pa·s) verdünnt wird.

4. Verfahren nach Anspruch 1, 2 oder 3, dadurch gekennzeichnet, daß die im Schritt (d) hergestellte Harzlösung eine Harzlösung mit hohem Feststoffgehalt und einer Viskosität im Bereich von 2,0 bis 2,5 Poise (0,2 bis 0,25 Pa·s) ist.

5. Verfahren nach Anspruch 1, 2, 3 oder 4, dadurch gekennzeichnet, daß der Harzlösung nach dem Schritt (d) Quarzstaub zugesetzt wird, wodurch eine thixotrope Harzlösung mit hohem Feststoffgehalt gebildet wird.

6. Verfahren nach Anspruch 1, 2 oder 3, dadurch gekennzeichnet, daß der Reaktionsmischung zwischen den Schritten (c) und (d) Polyvinylalkohol zugesetzt wird und der Rückfluß fortgesetzt wird, bis die Viskosität der Reaktionsmischung im Bereich von 95 bis 105 Poise (9,5 bis 10,5 Pa·s) liegt.

7. Verfahren nach Anspruch 6, dadurch gekennzeichnet, daß die im Schritt (d) gebildete Harzlösung eine Harzlösung mit geringem Feststoffgehalt und einer Viskosität von etwa 3,0 Poise (0,3 Pa·s) ist.

8. Verfahren nach Anspruch 6 oder 7, dadurch gekennzeichnet, daß der Harzlösung nach dem Schritt (d) Quarzstaub zugesetzt wird, wodurch eine thixotrope Harzlösung mit geringem Feststoffgehalt gebildet wird.

9. Verfahren nach einem der Ansprüche 1 bis 8, dadurch gekennzeichnet, daß das im Schritt (c) zugesetzte Alkalimetallcarbonat Kaliumcarbonat ist.

10. Verfahren zur Herstellung eines Phenol-Resorcinol-Formaldehyd-Klebharzes, umfassend das Mischen einer nach dem Verfahren nach einem der Ansprüche 1 bis 9 hergestellten Harzlösung mit einem Härter und gegebenenfalls einem oder mehreren herkömmlichen Füllstoffen oder Verdünnungsmitteln für Klebharze.

11. Verfahren nach Anspruch 10, wobei der Härter Paraformaldehyd oder Paraformaldehyd in einer seiner höheren Polymerformen ist und das Mischen bei einem pH-Wert im Bereich von 7,5 bis 9,5 erfolgt.

12. Verfahren nach Anspruch 10 oder 11, wobei die Harzlösung mit einer Härteraufschlämmung gemischt wird, die Polyvinylalkohol in einer Menge im Bereich von 5 bis 20 Gew.% und Attapulgitmineral in einer Menge im Bereich von 3 bis 11 Gew.% umfaßt, wobei Paraformaldehyd und Nußschalenpulver den Rest der Härteraufschlämmung darstellen.

13. Phenol-Resorcinol-Formaldehyd-Harz für die Herstellung eines schnellhärtenden Phenol-Resorcinol-Formaldehyd-Klebharzes, umfassend ein nach einem Verfahren nach einem der Ansprüche 1 bis 9 hergestelltes Phenol-Resorcinol-Formaldehyd-Harz.

14. Stabiles Phenol-Resorcinol-Formaldehyd-Harz, umfassend das Kondensationsprodukt von 50 bis 95 Mol Phenol und 5 bis 50 Mol Resorcinol pro 100 Mol des gesamten Phenols und Resorcinols und 0,55 bis 0,75 Mol Formaldehyd auf jedes Mol des gesamten Phenol- und Resorcinolgehalts, dadurch gekennzeichnet, daß es zusätzlich ein Alkalimetallcarbonat mit 4 bis 8 Gew.% des Harzes enthält.

15. Stabiles Harz nach Anspruch 13 oder 14, wobei das Alkalimetallcarbonat Kaliumcarbonat ist.

16. Phenol-Resorcinol-Formaldehyd-Klebharz nach einem der Ansprüche 10 bis 12 hergestellt.

17. Phenol-Resorcinol-Formaldehyd-Klebharz, umfassend ein Harz nach einem der Ansprüche 13 bis 15 und einen Härter und gegebenenfalls ein oder mehrere herkömmliche Füllstoffe oder Verdünnungsmittel für Klebharze.

18. Phenol-Resorcinol-Formaldehyd-Klebharz, umfassend ein Harz nach einem der Ansprüche 13 bis 15 und eine Härterkomponente, umfassend Polyvinylalkohol in einer Menge im Bereich von 5 bis 20 Gew.%, Attapulgitmineral in einer Menge im Bereich von 3 bis 11 Gew.%, Paraformaldehyd und Nußschalenpulver.

## Revendications

1. Procédé de préparation d'une solution de résine phénol-résorcinol-formaldéhyde fusible, cette solution de résine contenant au plus 95 moles de phénol et au moins 5 moles de résorcinol pour 100 moles au total de phénol et de résorcinol, et de 0,55 à 0,75 moles de formaldéhyde pour 1 mole au total de phénol et de résorcinol, caractérisé en ce que l'on prépare ladite solution de résine en effectuant les étapes suivantes : a) on fait réagir ledit phénol et ledit formaldéhyde, à un pH
initial valant de 8,5 à 9,2, en présence d'un catalyseur constitué par un sulfite ou un bisulfite de métal alcalin ;
b) on chauffe ensuite le mélange réactionnel au reflux, jusqu'à ce que la viscosité du mélange, mesurée selon la méthode de Gardner-Holdt, se situe dans la gamme U-V de Gardner-Holdt ;
c) on introduit le résorcinol dans le mélange réactionnel et on poursuit le chauffage au reflux jusqu'à ce que la viscosité du mélange réactionnel soit pratiquement constante et vaille de 30 à 100 secondes, selon la méthode de Gardner ;
d) on dilue ensuite le mélange réactionnel avec un solvant miscible à l'eau, et on y ajoute un carbonate de métal alcalin en une quantité représentant de 4 à 8 % du poids du mélange réactionnel obtenu à la fin de l'étape (c), pour obtenir une solution de résine dont la teneur en matières solides vaut de 40 à 60 % en poids ; et
e) ensuite, si le pH de la solution de résine formée au cours de l'étape (d) est inférieur à 7,5, on ajuste le pH de cette solution de résine à une valeur d'au moins 7,5.

2. Procédé conforme à la revendication 1, caractérisé en ce que, dans l'étape (a), on utilise de 0,04 à 0,09 mole de sulfite par mole de formaldéhyde.

3. Procédé conforme à la revendication 1 ou 2, caractérisé en ce que, dans l'étape (d), on dilue le mélange réactionnel sans que sa viscosité devienne inférieure à 2,0 poises (0,2 Pa.s).

4. Procédé conforme à la revendication 1, 2 ou 3, caractérisé en ce que, dans l'étape (d), la solution de résine formée est une solution dont la teneur en résine et matières solides est élevée et dont la viscosité vaut de 2,0 à 2,5 poises (0,2 à 0,25 Pa.s).

5. Procédé conforme à la revendication 1, 2, 3 ou 4, caractérisé en ce que, après l'étape (d), on ajoute de la silice fumée à la solution de résine, pour former une solution de résine thixotrope à haute teneur en matières solides.

6. Procédé conforme à la revendication 1, 2 ou 3, caractérisé en ce que, entre les étapes (c) et (d), on ajoute du poly(alcool vinylique) au mélange réactionnel et on continue à chauffer le mélange réactionnel au reflux jusqu'à ce que sa viscosité vaille de 95 à 105 poises (9,5 à 10,5 Pa.s).

7. Procédé conforme à la revendication 6, caractérisé en ce que, dans l'étape (d), la solution de résine formée est une solution dont la teneur en matières solides est basse et dont la viscosité vaut environ 3,0 poises (0,3 Pa.s).

8. Procédé conforme à la revendication 6 ou 7, caractérisé en ce que, après l'étape (d), on ajoute de la silice fumée à la solution de résine, pour former une solution de résine thixotrope à basse teneur en matières solides.

9. Procédé conforme à l'une des revendications 1 à 8, caractérisé en ce que le carbonate de métal alcalin ajouté au cours de l'étape (c) est du carbonate de potassium.

10. Procédé de préparation d'un adhésif à base de résine phénol-résorcinol-formaldéhyde, qui comporte le fait de mélanger une solution de résine, préparée selon un procédé conforme à l'une des revendications 1 à 9, avec un durcisseur, et éventuellement, avec un ou plusieurs des diluants ou des charges habituellement employés dans des adhésifs à base de résine.

11. Procédé conforme à la revendication 10, dans lequel le durcisseur est du paraformaldéhyde, tel quel ou sous l'une de ses formes hautement polymérisées, et le mélange est réalisé à un pH de 7,5 à 9,5.

12. Procédé conforme à la revendication 10 ou 11, dans lequel on mélange la solution de résine avec une suspension de durcisseur, qui contient du poly(alcool vinylique) en une proportion de 5 à 20 % en poids et de l'attapulgite en une proportion de 3 à 11 % en poids, le reste de ladite suspension de durcisseur étant constitué par du paraformaldéhyde et de la poudre de coquilles de noix.

13. Résine phénol-résorcinol-formaldéhyde, destinée à être utilisée pour préparer un adhésif à durcissement rapide à base de résine phénol-résorcinol-formaldéhyde, qui est une résine phénol-résorcinol-formaldéhyde préparée selon un procédé conforme à l'une des revendications 1 à 9.

14. Résine phénol-résorcinol-formaldéhyde stable, constituée par du produit de condensation de 50 à 95 moles de phénol et de 5 à 50 moles de résorcinol, pour 100 moles au total de phénol et de résorcinol, et de 0,55 à 0,75 moles de formaldéhyde pour 1 mole au total de phénol et de résorcinol, caractérisée en ce qu'elle contient en outre de 4 à 8 % en poids, par rapport à la résine, d'un carbonate de métal alcalin.

15. Résine stable conforme à la revendication 13 ou 14, dans laquelle le carbonate de métal alcalin est du carbonate de potassium.

16. Adhésif à base de résine phénol-résorcinol-formaldéhyde, préparé selon un procédé conforme à l'une des revendications 10 à 12.

17. Adhésif à base de résine phénol-résorcinol-formaldéhyde, constitué par une résine conforme à l'une des revendications 13 à 15 et un durcisseur, ainsi que, éventuellement, un ou plusieurs des diluants ou des charges habituellement employés dans des adhésifs à base de résine.

18. Adhésif à base de résine phénol-résorcinol-formaldéhyde, constitué par une résine conforme à l'une des revendications 13 à 15 et un durcisseur composé de poly(alcool vinylique) en une proportion de 5 à 20 % en poids, d'attapulgite en une proportion de 3 à 20 % en poids, de paraformaldéhyde et de poudre de coquilles de noix.
